# EUROPEAN PATENT APPLICATION

(11) **EP 2 547 138 A1**
(43) Date of publication of application: **16.01.2013**
(21) Application number: 11756307.2
(22) Date of filing: 15.03.2011
(51) Int. Cl.: H04W 16/26, H04W 28/04

(54) **MOBILE COMMUNICATION METHOD AND RELAY NODE**

(30) Priority: 15.03.2010 JP 2010057871
(71) Applicant: NTT DOCOMO, INC., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); UMESH, Anil, Tokyo 100-6150 (JP); IWAMURA, Mikio, Tokyo 100-6150 (JP); ISHII, Minami, Tokyo 100-6150 (JP)
(74) Representative: HOFFMANN EITLE
(86) International application number: PCT/JP2011/056082
(87) International publication number: WO 2011/115122

(57) **Abstract**

A relay node RN according to the present invention includes an MBSFN subframe setting information acquisition unit 11 configured to acquire setting information from a radio base station DeNB in an RRC connection setting process with the radio base station DeNB, a reception unit 14 configured to receive an uplink signal from the mobile station UE in a first period, and to receive a downlink signal from the radio base station DeNB in an MBSFN subframe based on the acquired setting information, and a transmission unit 13 configured to transmit a downlink signal to the mobile station UE in a second period, wherein the transmission unit 13 and the reception unit 14 are configured such that the first period and the second period are alternately switched to be a half of RTT of synchronous HARQ control.

## Description

### [Technical Field]

The present invention relates to a mobile communication method and a relay node.

### [Background Art]

In an LTE-Advanced scheme which is the next-generation scheme of an LTE (Long Term Evolution) scheme, when a backhaul link between a radio base station DeNB (Donor-eNB) and a relay node RN, and an access link between the relay node RN and a mobile station UE (User Equipment) are operated with the same frequency, it is agreed that an MBSFN (MBMS Single Frequency Network) subframe is used between the backhaul link and the access link in order to realize resource partition.

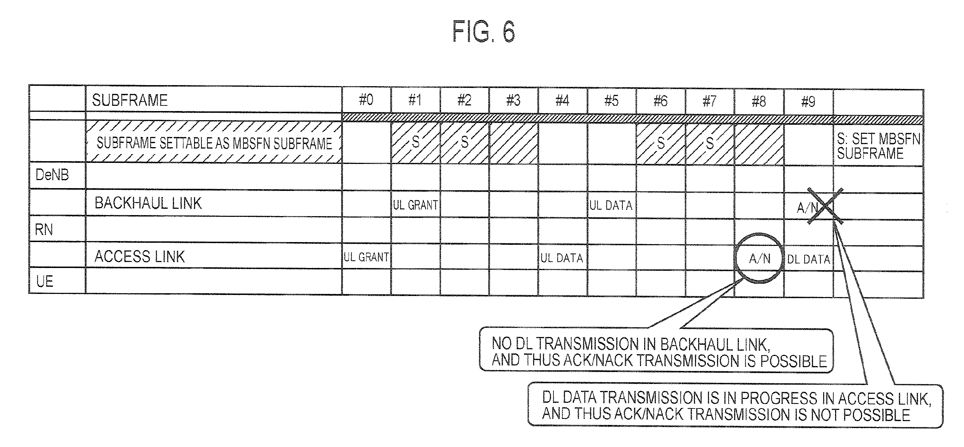

Specifically, as illustrated in Fig. 6, in the backhaul link, the radio base station DeNB is configured to transmit a downlink signal in subframes (subframes #1, #2, #6, and #7 in an example of Fig. 6) set as the MBSFN subframes.

In the example of Fig. 6, the radio base station DeNB transmits a resource assignment signal (UG: UL grant) for an uplink to the relay node RN in the subframe #1 set as the MBSFN subframe.

Meanwhile, in the access link, the relay node RN is configured to transmit a downlink signal to the mobile station UE in subframes (subframes #0, #3, #4, #5, #8, and #9 in the example of Fig. 6) other than the subframes set as the MBSFN subframes.

In the example of Fig. 6, the relay node RN transmits downlink data (D) to the mobile station UE in the subframe #9 other than the subframes set as the MBSFN subframes.

### [Citation List]

### [Non Patent Literature]

[NPL 1] 3GPP contribution, R2-096762 "HARQ Operation for Relaying", Ericsson and ST-ricsson
[NPL 2] 3GPP TR36.912 "Feasibility study for Further Advancements for E-UTRA (LTE-Advanced)" December, 2009

### [Summary of Invention]

### [Technical Problem]

However, in the LTE-Advanced scheme, subframes settable as the MBSFN subframes are limited to the subframes #1, #2, #3, #6, #7, and #8.

Furthermore, in the LTE-Advanced scheme, it is agreed that synchronous HARQ (synchronous Hybrid ARQ) control is applied to the backhaul link and the access link.

Therefore, there is a problem that it may not be possible to achieve a configuration of the LTE-Advanced scheme, as described above, using RTT (Round Trip Time) of HARQ control used in an LTE (Rel-8) scheme.

Therefore, the present invention has been achieved in view of the above-described problems, and an object thereof is to provide a mobile communication method and a relay node, by which it is possible to realize the resource partition, as described above, even when synchronous HARQ control is applied.

### [Solution to Problem]

A first characteristic of the present embodiment is summarized in that a mobile communication method, in which synchronous HARQ control is performed between a relay node and a mobile station, and between the relay node and a radio base station, in which RTT of the synchronous HARQ control including a first period and a second period, and the mobile communication method includes, a step of receiving, by the relay node, a downlink signal from the radio base station in an MBSFN subframe set in a subframe configuring the first period among subframes settable as MBSFN, and a step of transmitting, by the relay node, a downlink signal to the mobile station in the second period.

A second characteristic of the present embodiment is summarized in that a relay node, which is configured to perform synchronous HARQ control with a mobile station and with a radio base station, in which RTT of the synchronous HARQ control including a first period and a second period, and the relay node includes, a reception unit configured to receive a downlink signal from the radio base station in an MBSFN subframe set in a subframe configuring the first period among subframes settable as MBSFN, and a transmission unit configured to transmit a downlink signal to the mobile station in the second period.

### [Advantageous Effects of Invention]

As described above, according to the present invention, it is possible to provide a mobile communication method and a relay node, by which it is possible to realize the resource partition, as described above, even when synchronous HARQ control is applied.

### [Brief Description of Drawings]

[Fig. 1] Fig. 1 is a diagram showing the entire configuration of a mobile communication system according to a first embodiment of the present invention.
[Fig. 2] Fig. 2 is a diagram for explaining transmission and reception timings among a radio base station, a relay node, and a mobile station in the mobile communication system according to the first embodiment of the present invention.
[Fig. 3] Fig. 3 is a functional block diagram of the relay node according to the first embodiment of the present invention.
[Fig. 4] Fig. 4 is a functional block diagram of a radio base station according to the first embodiment of the present invention.
[Fig. 5] Fig. 5 is a sequence diagram illustrating an operation of the mobile communication system according to the first embodiment of the present invention.
[Fig. 6] Fig. 6 is a diagram for explaining transmission and reception timings between a radio base station and a relay node in a conventional mobile communication system.

### [Description of Embodiments]

### (Configuration of mobile communication system according to first embodiment of the present invention)

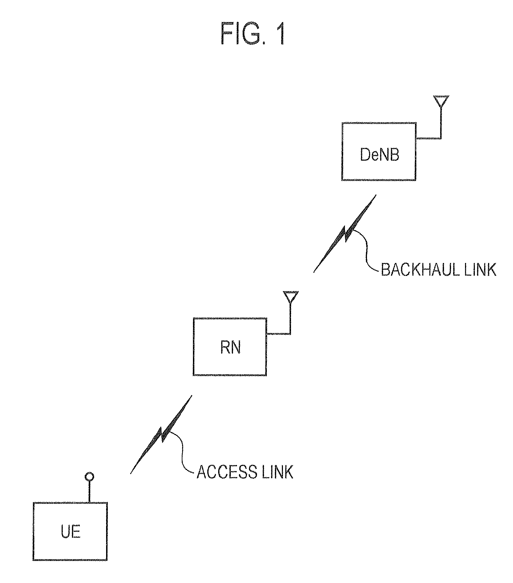

With reference to Fig. 1 to Fig. 4, the configuration of a mobile communication system according to a first embodiment of the present invention will be described.

The mobile communication system according to the present embodiment is a mobile communication system of an LTE-Advanced scheme, and includes a radio base station DeNB and a relay node RN as illustrated in Fig. 1.

Here, a link between the radio base station DeNB and the relay node RN will be referred to as a "backhaul link (a Un interface link)", and a link between a mobile station UE and the relay node RN will be referred to as an "access link (a Uu interface link)".

Furthermore, in the mobile communication system according to the present embodiment, synchronous HARQ control is configured to be applied to the backhaul link and the access link. Note that in the mobile communication system according to the present embodiment, the synchronous HARQ control may be configured not to be applied to the backhaul link.

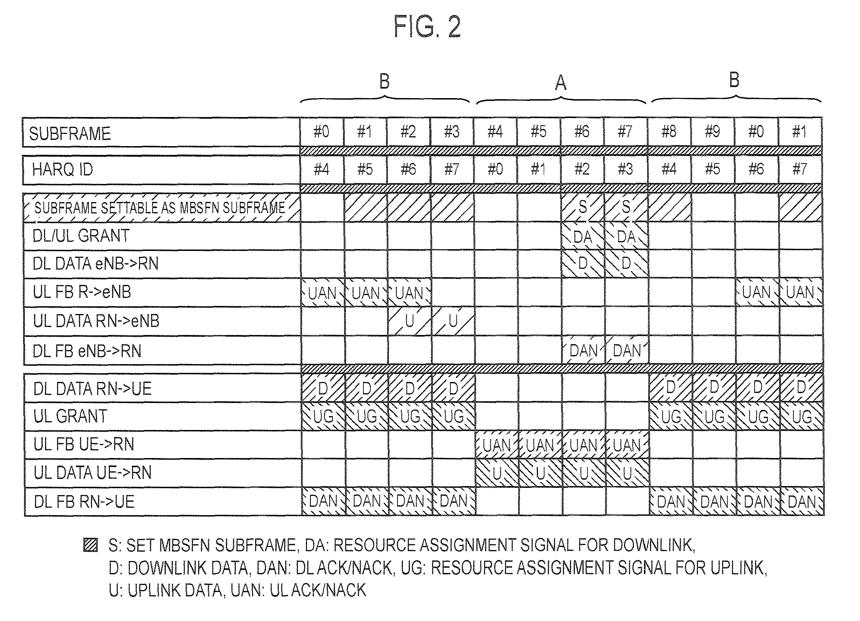

As illustrated in Fig. 2, in the mobile communication system according to the present embodiment, in a first period A (4 ms) configured by four (a predetermined number of) subframes (subframes #4 to #7 in an example of Fig. 2), the mobile station UE is configured to transmit an uplink signal, for example, uplink data (U), or transmission acknowledgement information ACK/NACK (UAN) toward downlink data, to the relay node RN.

Furthermore, in the mobile communication system according to the present embodiment, in a second period B (4 ms) configured by four (a predetermined number of) subframes (subframes #0 to #3 or subframes #8 to #1 in the example of Fig. 2), the relay node RN is configured to transmit a downlink signal, for example, downlink data (D), a resource assignment signal (UG/DA) for the transmission of uplink data and downlink data, or transmission acknowledgement information ACK/NACK (DAN) toward uplink data, to the mobile station UE.

Furthermore, in the mobile communication system according to the present embodiment, in the access link, in order to maintain consistency with RTT (8 ms) of the HARQ control used in an LTE (Rel-8) scheme, the first period A and the second period B are configured to be alternately switched, that is, the transmission of an uplink signal and the transmission of a downlink signal are configured to be alternately switched with a cycle of 4 ms.

Here, the first period A and the second period B are configured to be 4 ms, that is, to be a half of the RTT (8 ms) of the HARQ control used in the LTE (Rel-8) scheme. Note that the first period A and the second period B may be other than 4 ms, or the lengths of the first period A and the second period B may be configured to be arbitrarily set.

Furthermore, in each subframe, one of the transmission of the uplink signal and the transmission of the downlink signal may be set to be performed, or both the transmission of the uplink signal and the transmission of the downlink signal may be set to be performed.

Furthermore, in the mobile communication system according to the present embodiment, an MBSFN subframe is settable in subframes (the subframes #6 and #7 in the example of Fig. 2) configuring the first period A among the subframes #1, #2, #3, #6, #7, and #8 settable as the MBSFN subframes.

For example, in the mobile communication system according to the present embodiment, it is possible to determine a setting location (a setting pattern) of the MBSFN subframe in a predetermined unit (for example, in units of 10 ms or 40 ms).

Here, the radio base station DeNB is configured to transmit a downlink signal, for example, downlink data (D), a resource assignment signal (UG/DA) for the transmission of uplink data and downlink data, or transmission acknowledgement information ACK/NACK (DAN) toward uplink data, to the relay node RN in the set MBSFN subframe.

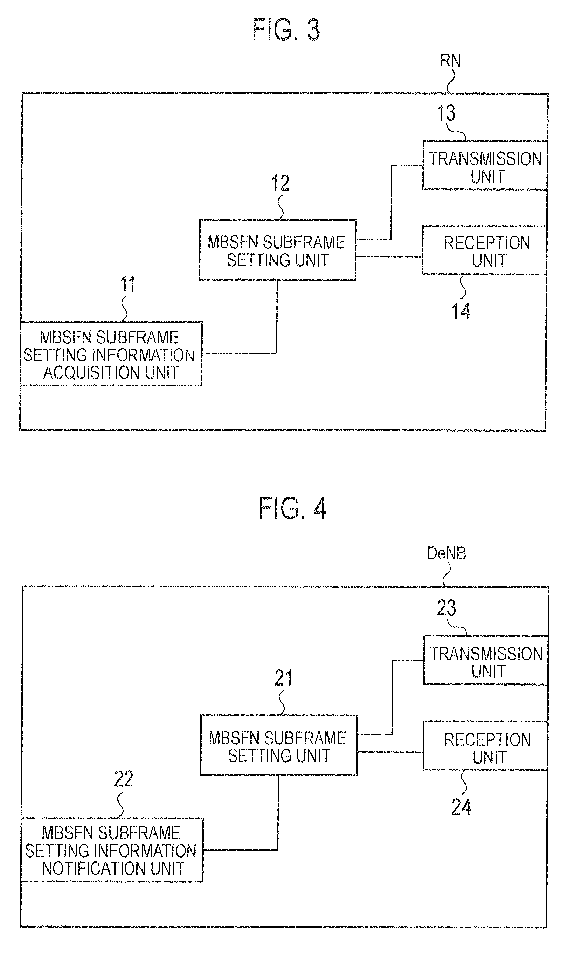

As illustrated in Fig. 3, the relay node RN includes an MBSFN subframe setting information acquisition unit 11, an MBSFN subframe setting unit 12, a transmission unit 13, and a reception unit 14.

The MBSFN subframe setting information acquisition unit 11 is configured to acquire setting information indicating the setting location of the MBSFN subframe in the first period A from the radio base station DeNB.

For example, the MBSFN subframe setting information acquisition unit 11 may be configured to acquire the setting information in an RRC (Radio Resource Control) connection setting process (that is, a connection process of the relay node RN to the radio base station DeNB) with the radio base station DeNB.

Specifically, the MBSFN subframe setting information acquisition unit 11 may be configured to acquire the setting information via RRC signaling, such as "RRC Connection Reconfiguration" transmitted by the radio base station DeNB, at an arbitrary timing.

The MBSFN subframe setting unit 12 is configured to set the MBSFN subframe in the backhaul link based on the setting information acquired by the MBSFN subframe setting information acquisition unit 11.

The transmission unit 13 is configured to transmit an uplink signal, for example, uplink data (U), or transmission acknowledgement information ACK/NACK (UAN) toward downlink data, to the radio base station DeNB.

Specifically, the transmission unit 13 is configured to transmit the uplink data (U) to the radio base station DeNB after 4 ms upon receiving the resource assignment signal (UG) for uplink data transmission from the radio base station DeNB.

Here, when the synchronous HARQ control is applied to the backhaul link, the transmission unit 13 is configured to transmit transmission acknowledgement information ACK/NACK (UAN) toward downlink data to the radio base station DeNB after 4 ms upon receiving the downlink data (D) from the radio base station DeNB.

Furthermore, the transmission unit 13 is configured to transmit the downlink signal, for example, the downlink data (D), the resource assignment signal (UG/DA) for the transmission of uplink data and downlink data, or the transmission acknowledgement information ACK/NACK (DAN) toward uplink data, to the mobile station UE.

Here, when the synchronous HARQ control is applied to the access link, the transmission unit 13 is configured to transmit the transmission acknowledgement information ACK/NACK (DAN) toward uplink data to the mobile station UE after 4 ms upon receiving the uplink data (U) from the mobile station UE.

The reception unit 14 is configured to transmit the downlink signal, for example, the downlink data (D), the resource assignment signal (UG/DA) for the transmission of uplink data and downlink data, or the transmission acknowledgement information ACK/NACK (DAN) toward uplink data, from the radio base station DeNB.

Furthermore, the reception unit 14 is configured to receive the uplink signal, for example, the uplink data (U), or the transmission acknowledgement information ACK/NACK (UAN) toward downlink data, from the mobile station UE.

As illustrated in Fig. 4, the radio base station DeNB includes an MBSFN subframe setting unit 21, an MBSFN subframe setting information notification unit 22, a transmission unit 23, and a reception unit 24.

The MBSFN subframe setting unit 21 is configured to set the MBSFN subframe in the backhaul link.

The MBSFN subframe setting information notification unit 22 is configured to notify the relay node RN of the setting information indicating the setting location of the MBSFN subframe in the first period A.

For example, the MBSFN subframe setting information notification unit 22 may be configured to notify the relay node RN of the setting information in the RRC connection setting process with the relay node RN.

Specifically, the MBSFN subframe setting information notification unit 22 may be configured to notify the relay node RN of the setting information through the RRC signaling such as the "RRC Connection Reconfiguration" at an arbitrary timing.

The transmission unit 23 is configured to transmit the downlink signal, for example, the downlink data (D), the resource assignment signal (UG/DA) for the transmission of uplink data and downlink data, or the transmission acknowledgement information ACK/NACK (DAN) toward uplink data.

For example, when the synchronous HARQ control is applied to the backhaul link, the transmission unit 23 is configured to transmit the transmission acknowledgement information ACK/NACK (DAN) toward uplink data to the relay node RN after 4 ms upon receiving the uplink data (U) from the relay node RN.

The reception unit 24 is configured to receive the uplink signal, for example, the uplink data (U), or the transmission acknowledgement information ACK/NACK (UAN) toward downlink data, from the relay node RN.

### (Operation of the mobile communication system according to the first embodiment of the present invention)

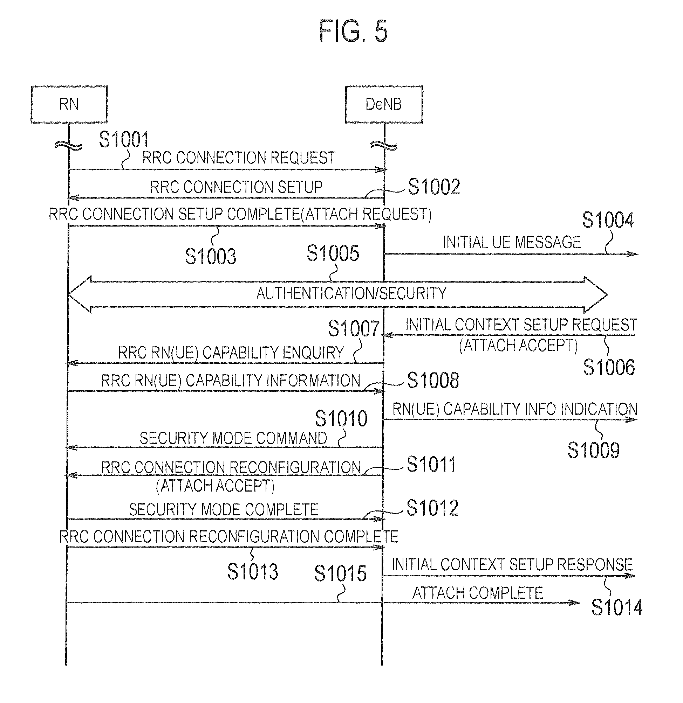

With reference to Fig. 5, an example of the RRC connection setting process between the relay node RN and the radio base station DeNB in the mobile communication system according to the present embodiment will be described.

As illustrated in Fig. 5, in step S1001, the relay node RN transmits "RRC Connection Request" for notifying that "it is RN" to the radio base station DeNB through "Establishment Cause".

In step S1002, the radio base station DeNB transmits "RRC Connection Setup" to the relay node RN, and in step S1003, the relay node RN transmits "RRC Connection Setup Complete" including "Attach Request" to the radio base station DeNB.

In step S1004, the radio base station DeNB transmits "Initial UE Message" to an upper node (for example, a mobile switching center MME (Mobility Management Entity)), and in step S1005, an "Authentication/Security" process is performed.

The radio base station DeNB receives "Initial Context Setup Request" including "Attach Accept" from the upper node in step S1006, and transmits "RRC RN (UE) Capability Enquiry" to the relay node RN in step S1007.

The radio base station DeNB receives "RRC RN (UE) Capability Information" from the relay node RN in step S1008, and transmits "RN (UE) Capability Info Indication" to the upper node in step S1009.

The radio base station DeNB transmits "Security Mode Command" to the relay node RN in step S1010, and transmits "RRC Connection Reconfiguration" including the "Attach Accept" to the relay node RN in step S1011.

Here, it is possible for the radio base station DeNB to notify the relay node RN of the setting information indicating the setting location of the MBSFN subframe in the first period A through the "RRC Connection Reconfiguration".

The relay node RN transmits "Security Mode Complete" to the radio base station DeNB in step S1012, and transmits "RRC Connection Reconfiguration Complete" to the radio base station DeNB in step S1013.

In step S1014, the radio base station DeNB transmits "Initial Context Setup Response" to the upper node, and in step S1015, the relay node RN transmits "Attach Complete" to the upper node.

### (Operation and Effect of the mobile communication system according to the first embodiment of the present invention)

In accordance with the mobile communication system according to the present embodiment, the MBSFN subframe, in which a downlink signal is transmitted in the backhaul link, is configured to be set in the first period A in which a downlink signal is not transmitted in the access link, the relay node RN is configured to acquire the setting location of the MBSFN subframe from the radio base station DeNB, and the first period A and the second period B are configured to be alternately switched in the period (4 ms) corresponding to a half of the RTT (for example, 8 ms) of the synchronous HARQ control used in the LTE (Rel-8) scheme, so that it is possible to apply the synchronous HARQ control in the LTE-Advanced scheme while realizing the above-described resource partition.

The characteristics of the present embodiment as described above may be expressed as follows.

A first characteristic of the present embodiment is summarized in that a mobile communication method, in which synchronous HARQ control is performed between a relay node RN and a mobile station UE, and between the relay node RN and a radio base station DeNB, includes: a step of acquiring, by the relay node RN, setting information indicating a setting location of an MBSFN subframe (a predetermined subframe) in a first period (for example, 4 ms) configured by a predetermined number of (for example, four) subframes from the radio base station DeNB; a step of receiving, by the relay node RN, an uplink signal from the mobile station UE in the first period; a step of receiving, by the relay node RN, a downlink signal from the radio base station DeNB in the MBSFN subframe based on the acquired setting information; and a step of transmitting, by the relay node RN, a downlink signal to the mobile station UE in a second period (for example, 4 ms) configured by a predetermined number of (for example, four) subframes, wherein in an access link (a link between the relay node and the mobile station), the first period and the second period are alternately switched and set to be a half of RTT (for example, 8 ms) of the synchronous HARQ control.

In the first characteristic of the present embodiment, the relay node RN may acquire the above-described setting information from the radio base station DeNB in an RRC connection setting process with the radio base station DeNB.

In the first characteristic of the present embodiment, the uplink signal may include uplink data (U) and transmission acknowledgement information ACK/NACK (UAN) toward downlink data, and the downlink signal may include downlink data (D), a resource assignment signal (UG/DA) for the transmission of uplink data and downlink data, and transmission acknowledgement information ACK/NACK (DAN) toward uplink data.

In the first characteristic of the present embodiment, it may be possible to include: a step of transmitting, by the relay node RN, uplink data (U) to the radio base station DeNB after the passage of a time (for example, 4 ms) corresponding to a predetermined number of (for example, four) subframes upon receiving a resource assignment signal (UG) for an uplink from the radio base station DeNB; and a step of transmitting, by the mobile station UE, uplink data (U) to the relay node RN after the passage of a time (for example, 4 ms) corresponding to a predetermined number of (for example, four) subframes upon receiving the resource assignment signal (UG) for an uplink from the relay node RN.

In the first characteristic of the present embodiment, at least one of the length of the first period and the length of the second period may be arbitrarily set.

A second characteristic of the present embodiment is summarized in that a relay node RN, which is configured to perform synchronous HARQ control with a mobile station UE and with a radio base station DeNB, includes: an MBSFN subframe setting information acquisition unit 11 configured to acquire the setting information from the radio base station DeNB; a reception unit 14 configured to receive an uplink signal from the mobile station UE in the first period, and to receive a downlink signal from the radio base station DeNB in an MBSFN subframe based on the acquired setting information; and a transmission unit 13 configured to transmit a downlink signal to the mobile station UE in the second period, wherein the transmission unit 13 and the reception unit 14 are configured such that the first period and the second period are alternately switched to be a half of RTT of the synchronous HARQ control in an access link.

In the second characteristic of the present embodiment, the MBSFN subframe setting information acquisition unit 11 may acquire the above-described setting information in an RRC connection setting process with the radio base station DeNB.

In the second characteristic of the present embodiment, the uplink signal may include uplink data (U) and transmission acknowledgement information ACK/NACK (UAN) toward downlink data, and the downlink signal may include downlink data (D), a resource assignment signal (UG/DAN) for the transmission of uplink data and downlink data, and transmission acknowledgement information ACK/NACK (DAN) toward uplink data.

In the second characteristic of the present embodiment, the transmission unit 13 may be configured to transmit uplink data (U) to the radio base station DeNB after the passage of a time (for example, 4 ms) corresponding to a predetermined number of (for example, four) subframes upon receiving a resource assignment signal (UG) for an uplink from the radio base station DeNB.

It is noted that the operation of the above-described the mobile station UE, a relay node RN or the radio base station DeNB may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE, the relay node RN or the radio base station DeNB. Further, such a storage medium or a processor may be arranged, as a discrete component, in in the mobile station UE, the relay node RN or the radio base station DeNB.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### [Reference Signs List]

- UE: Mobile station
- RN: Relay node
- DeNB: Radio base station
- 11: MBSFN subframe setting information acquisition unit
- 12, 21: MBSFN subframe setting unit
- 13, 23: Transmission unit
- 14, 24: Reception unit
- 22: MBSFN subframe setting information notification unit

## Claims

1. A mobile communication method, in which synchronous HARQ control is performed between a relay node and a mobile station, and between the relay node and a radio base station, wherein
RTT of the synchronous HARQ control including a first period and a second period, and the mobile communication method includes:
a step of receiving, by the relay node, a downlink signal from the radio base station in an MBSFN subframe set in a subframe configuring the first period among subframes settable as MBSFN; and
a step of transmitting, by the relay node, a downlink signal to the mobile station in the second period.

2. A relay node, which is configured to perform synchronous HARQ control with a mobile station and with a radio base station, wherein
RTT of the synchronous HARQ control including a first period and a second period, and the relay node includes:
a reception unit configured to receive a downlink signal from the radio base station in an MBSFN subframe set in a subframe configuring the first period among subframes settable as MBSFN; and
a transmission unit configured to transmit a downlink signal to the mobile station in the second period.
